(19)

**Europäisches Patentamt**

**European Patent Office**

**Office européen des brevets**

(11)   **EP 2 942 100 A2**

(12)   **EUROPEAN PATENT APPLICATION**

(43) Date of publication:
**11.11.2015 Bulletin 2015/46**

(51) Int Cl.:
**B01J 19/00** *(2006.01)*   **B41J 2/00** *(2006.01)*

(21) Application number: **15165091.8**

(22) Date of filing: **24.04.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **25.04.2014  DE 102014105887**

(71) Applicant: **Research Center Pharmaceutical Engineering GmbH**
**8010 Graz (AT)**

(72) Inventors:
• **Planchette, Carole**
  **8055 Graz (AT)**
• **Klein, Thomas**
  **8652 Kindberg (AT)**
• **Khinast, Johannes**
  **8010 Graz (AT)**
• **Pival, Simone**
  **8010 Graz (AT)**

(74) Representative: **Dilg, Haeusler, Schindelmann Patentanwaltsgesellschaft mbH**
**Leonrodstrasse 58**
**80636 München (DE)**

(54)   **IN-LINE METHOD FOR CONTROLLING AND FINELY ADJUSTING THE AMOUNT OF PRINTED MATERIAL**

(57)   A method of printing a predetermined amount of material, in particular liquid material, onto a substrate, is provided, wherein the method comprises printing a first amount of material onto a substrate, wherein the first amount of material is smaller than the predetermined amount of material; determining the actual printed first amount of material; determining a difference amount between the actual printed first amount of material and the predetermined amount of material; and printing a second amount of material onto the substrate, in particular onto a same position on the substrate as the first amount, wherein the second amount of material is less or equal to the difference amount.

Fig. 3A

EP 2 942 100 A2

**Description**

**Technical Field**

The invention relates to a method of printing a predetermined amount of material, in particular a liquid. Furthermore, the invention relates to a device for printing a predetermined amount of material onto a substrate, to a computer readable medium and a program element.

**Background**

Inkjet printing as well as micro dispensing have become very popular methods to deposit small amounts of liquids. Typical applications are found in the field of printed electronics, flat panel displays; optics where UV-curable optical polymers are a key-technology for cost effective production of micro-lenses; photovoltaic; chemistry involving significant efforts to develop functional fluids to be printed not only in 2D but also in 3D; life sciences for example for genetic research; food industry for products decoration; and pharmaceutical industry for diagnostic devices but also for new manufacturing processes of drug products.

In most of these applications and especially when Active Pharmaceutical Ingredients (API) are printed it is crucial to accurately control the amount of liquid which has been dispensed.

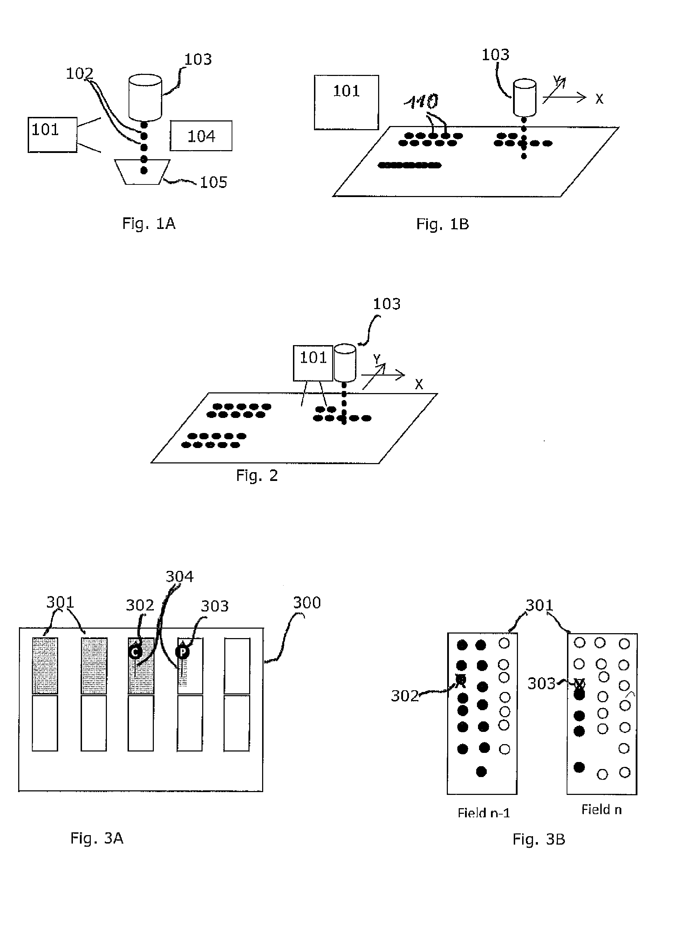

Unfortunately, currently, for most printers, the control on the volume deposited is made by estimating the drop volume while jetting is performed off line in front of a camera coupled with image processing software commonly called "drop-watcher", see Fig. 1. In particular, Fig. 1A on the left side shows a printer in a first kind of mode in which the printer is used together with the drop-watcher software in order to monitor drop generation. For monitoring the drop generation a camera 101 is used for taking images of droplets 102 generated by a nozzle 103 of the printer. For providing a sufficient light level a light source 104, e.g. an LED, is provided illuminating the droplets after generation by the nozzles before they are caught by a waste cuvette or container 105. From the monitoring the size of the droplets is determined for the use in the subsequent printing process, which is schematically shown in Fig. 1B on the right, showing the printer nozzle 103 while printing a plurality of printed dots 110. For that the nozzle can be moved in two lateral directions marked as X and Y in Fig. 1B. During the printing process the drop watcher (the operation of which was described above) can be switched off. In principle, the drop size or the dot size may be controlled again and a next printing step can start.

There are many limitations to this controlling technology. First of all, image acquisition is performed for moving droplets. Given the typical drop velocity (~1 m/s) and the typical droplet size (about 100 $\mu$m diameter), sharp images can only be obtained by combining an important magnification (aiming for 2 $\mu$m/pixel), a short exposure time (typically less than 1 $\mu$s as droplets need only 1$\mu$s to move of 1$\mu$m) and therefore a very strong illumination system. The strong illumination may cause irreversible damages to the functional liquid and lead to the degradation of the API. Most importantly, the control operated via the drop watcher is made off line. As a consequence, the production has to be stopped during the time period for which the control is performed and the liquid which is printed during this phase is wasted. Indeed controlled drops do not reach the substrate but a waste cuvette placed in the neighborhood of the optical set-up used for controlling. In case of costly or potent substances such as the ones found in pharmaceutical industry this step represents a significant loss of time, of money but also a potential safety issue for the operators.

Beside the costs and safety issues related to the implementation of drop watchers, such a control strategy remains unsatisfactory to reach accuracy required for drug products. If - for any kind of reasons such as temporary nozzle clogging or jetting instability - the process produces temporary significantly larger or smaller drops, the error may not be detected at all and if detected, it would only happen once the printing process has been finished while the next control at the drop watcher is performed. In this lucky case compared to undetected error, all the products manufactured between two consecutive controls have to be rejected due to unmet quality. In order to solve this issue, it has been proposed to install in-line control using a camera united with the print-head which allows for top view imaging, see Fig. 2.

In principle, Fig. 2 is similar to Fig. 1B however, the camera 101 is united with the printer, e.g. nozzle 103, so that the camera 101 is moved together with the printer or printer head. Thus, an advanced in-line control system may allow for imaging the deposited drops on the substrate. Such a system can identify printed errors (too large, too small or missing drops) but does not allow to reach an accuracy better than the one offered by the printer itself and often found in the range of 5% to 10%.

However, such systems only allow to control that the amount of liquid which has been dispensed is in the range of the volume which was expected based on the process documentation.

Practically, no printer system can produce strictly monodisperse drop streams; regardless to the printing technology, generated drops have intrinsic size distribution with variations in the range of 5% to 10% of the average diameter. Hence even if the average drop volume has been properly observed and estimated by such an in-line imaging system, the variability experienced during the printing process cannot be reduced below the printer variability i.e. for most commercially available printers below 5% to 10% which leads to a final volume accuracy of 5% to 10% at best. This limited accuracy is found to be insufficient for most pharmaceutical applications. Additionally, state-of-the-art printers do have a limited reproducibility in the sense that - for a given set of well controlled process parameters - the actual drop size may vary from print run to print run within the range of 10% at least. Based on this observation, it appears that targeted drop size cannot be accurately and reliably produced. Indeed targeted drop size can only be approached by re-adjusting the process parameters. Such a step requires a trained and experienced operator and possibly a lot of time and material.

In summary state-of-the-art allows at best:

- Passive control of drop volume after it was printed
- Once a droplet is printed currently there is no way in correcting the deposited drop volume
- Drop volume variation ranges between 5-10% which is intrinsic to the print head used

**Summary of the invention**

Thus, there may be a need to provide a method and a device for controlling and finely adjusting an amount of printed material having a high accuracy. This need may be met by the method, the device, the computer-readable medium and the program element according to the independent claims. Further features can be derived from the dependent claims.

According to an exemplary aspect a method of printing a predetermined amount of material, in particular liquid material, onto a substrate, is provided, wherein the method comprises printing a first amount of material onto a substrate, wherein the first amount of material is smaller than the predetermined amount of material; determining the actual printed first amount of material; determining a difference amount between the actual printed first amount of material and the predetermined amount of material; and printing a second amount of material onto the substrate, in particular onto a same position on the substrate as the first amount, wherein the second amount of material is less or equal to the difference amount.

According to an exemplary aspect an in-line method for controlling and finely adjusting the amount of printed material independently from the printing system accuracy and stability is provided, wherein the printing strategy combines: (i) in-line imaging system, (ii) in-line volume calculation capabilities and (iii) feedback loop to the printer to progressively and finely approach the targeted volume.

According to an exemplary aspect a device for printing a predetermined amount of material onto a substrate is provided, wherein the device is adapted to perform a method according to an exemplary aspect. In particular, the device may comprise a printer, an imaging system and an illumination system.

According to an exemplary aspect a computer readable medium is provided, in which a computer program is stored, which, when being executed by a processor, is adapted to control or carry out a method according to exemplary embodiment.

According to an exemplary aspect a program element is provided, which, when being executed by a processor, is adapted to control or carry out a method according to an exemplary aspect.

In particular, a method of (and a corresponding device for) accurately printing an predetermined amount of a printing material may be provided, wherein the predetermined amount is iteratively achieved by performing several printing steps after another wherein an optional determining or calculating of the amount of printing material already printed on a substrate is performed and in a subsequently printing step a portion of the still missing amount is printed. This iteration may be performed till a difference between the predetermined amount and the already printed amount is below a predetermined threshold. It should be noted that any detector or sensor which is suitable to determine an amount of printed material in a sufficient accuracy or precision may be used for provide information or measurements for the optional determining or calculation step.

In the following further exemplary embodiments of the method will be described. However, the respective features may be combined as well with the device, the computer readable medium and the program element.

According to an exemplary embodiment of the method the determining of the actual printed first amount is performed based on a measurement of an imaging system, in particular an in-line imaging system.

In particular, the determining or calculation of the actual printed amount may be performed by a processing or computing unit, which may be adapted or configured to analyze information achieved by the measurement of the imaging system. For example, the processing unit may be part of a computer which may as well be adapted to calculate or determine an amount still missing (i.e. not printed on a substrate) and feedback a respective signal to the printer. Thus, a feedback loop may be provided so that the predetermined amount of printing material may be printed on a substrate. It should be noted that "imaging system" might be interpreted in a broad sense, e.g. encompassing a camera (like a CCD camera) or even a photodiode the signal of which is as well based on an optical measurement but in principle only providing a signal corresponding to a light level and not providing a real picture or photo.

According to an exemplary embodiment of the method an image of the substrate is taken substantially from above the substrate.

In particular, the image may be taken from above, e.g. in an angle perpendicular or at least substantially perpendicular to the substrate. Alternatively or additionally, an (additional) image may be taken in a side view, e.g. perpendicular to the direction the drops are printed or ejected or in a plane parallel to the substrate plane. In general images may be taken in or along any direction.

According to an exemplary embodiment of the method the determining is performed in-line or on the fly.

In particular, the determining of the actual printed first amount and/or of the difference amount may be performed on the fly or in-line. For example, the determining may be performed during the printing process. Thus, it may be possible to directly determining or calculating the actual amount and thus the missing amount of printing material which has to be printed subsequently.

According to the exemplary embodiment of the method the printing and calculating or determining steps are performed iteratively. In particular, the printing and calculating steps may be performed till the determined difference amount is below a predetermined threshold. Suitable thresholds may be 10%, 5%, 2%, 1%, 0.5%, 0.25%, 0.2%, 0.1% or the like, wherein the threshold may depend on the application.

According to an exemplary embodiment of the method the material comprises a pharmaceutical active ingredient or active pharmaceutical ingredient.

According to an exemplary embodiment the device comprises at least one element out of the group consisting of: a printer; an imaging system; an illumination system; a processing system; and a feedback loop.

In particular, the imaging system may be an in-line imaging system (like a top-view and/or side view camera), e.g. a CCD camera, and/or a photodiode or the like. In principle any imaging system suitable for taking an image or photo of the droplets and/or the imprint or spot formed by the droplets on the substrate may be suitable. The imaging system may be adapted to perform a measurement of the droplets and/or the imprint of the droplets on the substrate and to provide or transfer the information, e.g. coded in a signal, to a processing unit or system. The processing system or unit may be formed by a computer, for example and may be adapted to analyze the received signal of the imaging system. For example, the amount of printing material already printed on the substrate may be determinable and/or a difference between the intended or predetermined amount of printing material and the actual printed amount (determined or calculated out of the measurement of the imaging system) may be determinable. For adjusting and/or performing the next printing step, a result of the analyzing and/or determination may be sent to the printer, which may be adapted to adjust a next printing step according to the received result. Thus, a feedback loop may be provided which may be suitable or effective to adjust an overall or total printing amount to an intended amount. In order to increase the efficiency of the imaging system an optional illumination system, e.g. an LED, laser diode or any other suitable light source may be provided.

### Brief Description of the Drawings

In the drawings, like reference characters generally refer to the same parts throughout the different views. The drawings are not necessarily to scale. Instead emphasis is generally being placed upon illustrating the principles of the invention. In the following description, various embodiments are described with reference to the following drawings, in which:

**Figs. 1A and 1B** schematically show the operation of a common printing process;
**Fig. 2** schematically shows the operation of another common printing process;
**Fig. 3** schematically shows a printing process according to an exemplary embodiment;
**Fig. 4** schematically shows the effect of a contact angle during a printing process; and
**Fig. 5** shows graphs illustrating the influence of the contact angle on the observed drop diameter.

### Detailed Description

In the following further exemplary embodiments of a printing process are described. It should be noted that the description of specific features described in the context of one specific exemplary embodiment may be combined with others exemplary embodiments as well.

The word "exemplary" is used herein to mean "serving as an example, instance, or illustration". Any embodiment or design described herein as "exemplary" is not necessarily to be construed as preferred or advantageous over other embodiments or designs.

In general, exemplary embodiments of the invention may be based on printing strategy and comprises three features namely (1) an in-line imaging system, e.g. a top view camera, (2) in-line volume calculation, (3) a feedback procedure to the printing system. Altogether these 3 features may allow for tuning the accuracy of volume deposition for any printing system, independently of the accuracy of the printing system itself and without generating any material waste and hence allows overcoming the outlined problems.

The in-line imaging system may allow to measure the volume dispensed and may consist of (a) a top view camera or (b) a side view (high speed) line camera and corresponding illumination or (c) a photodiode and corresponding illumination such as a laser-diode providing a side-view imaging of falling drops or (d) any other in-line imaging system enabling these measurements. An imaging system of type (a) may be especially adapted to regimes of slow evaporation (low volatility of inks or high vapor pressures of solvents in the printing area) and to homogeneous not immediately porous substrates - properties which can be enhanced by mean of applying a coating or a surface treatment. Results obtained with in-line imaging system of types (b) or (c) may be independent of the substrate properties.

Practically, the various fields on the substrate to be printed (not necessarily with the same liquids and/or same volumes) are defined and the movement of the print head is designed in such a way that while printing in the targeted field "n", the just printed field "n-1" can be observed by using an in-line imaging system of type (a) providing a top view of the substrate (feature 1), (which will be explained later in the context of Fig. 3. Thus, it is possible to acquire information about dispensed volume in the field "n-1" while printing in the field "n" without generating any significant time loss.

For in-line imaging systems of types (b) or (c), the measurement of the drops volume may be made while the drops are falling from the print head to the substrate - the drops deposited in field "n" are imaged during the printing of the field "n".

The data can be processed in parallel by image analysis software (feature 2 above) leading to the calculation of the deposited volume for each field. To do so, the in-line imaging system will be calibrated accordingly. Using imaging system of type (a), the calibration may be performed for each couple of liquid / substrate by directly measuring the contact angle of the printed liquid on the substrate, by doing gravimetric measurements, by doing analytical measurements (HPLC, UV-Vis,...) on the printed drops or by any other kind of method. For other kinds of in-line imaging system, the calibration may be done via gravimetric measurements, by doing analytical measurements on the printed drops or by any other kind of method.

In principle, Fig. 3 shows a top view of the printing system and substrate. In particular, Fig. 3 shows on the left side a substrate 300 having various printing fields 301 defined (in grey in already partially printed, in white if not). While a print-head (303) is printing in the field "n", the field "n-1" is imaged by an in-line camera (302) - feature 1 - type (a). The arrows 304 show the relative motions of print-head and camera with respect to substrate. Just for clarity reasons it should be mentioned that such a relative movement may of course be provided by moving the print-head and/or by moving the substrate (e.g. by moving a print-table on which the substrate is placed).

The right side of Fig. 3 shows a detail of the substrate of the left side. In particular, the right side focusses on the fields 301 "n-1" and "n". In dark, printed drops, in light not yet printed drops are shown. The positions of the print-head 303 and camera 302 are represented by the crosses.

Beside the possibility of imaging deposited drops (feature 1 above) and estimating their actual volume (feature 2 above) in parallel to printing, the second essential point of the printing strategy proposed in this invention is to proceed by iteration (successive printing steps) to deposit the targeted volume using the feature 3 (as cited above).

The basic principle (simplified) of this iterative approach using feature 3 is as follows:

- The total volume which is printed in the first printing step is chosen to be smaller than the targeted one (total volume to be printed)
- First droplets are printed and simultaneously checked by an in-line imaging system, e.g. a camera (feature 1)
- A software detects the printed drops and calculates their volume

  $\Rightarrow$ After the first printing step, the volumes of deposited drops are known
  $\Rightarrow$ At this stage the drop volumes will show the described variation of 5-10% which is specific to the print head

- In a second step, the missing volume - according to the result of the volume calculation by the software - is printed

  $\Rightarrow$ This procedure can be iteratively run in loops till the needed accuracy has been reached
  $\Rightarrow$ This procedure works basically for all printers with camera and the described software
  $\Rightarrow$ Due to the systematic imaging of the printed drops, the position and volume of each drop are fully known and tracking of e.g. single printed API is included in this procedure

This key procedure can be described in more detail:

The targeted volume of a specific liquid for a given field is approached by successive printing steps (at least two, preferably more) in order to finely tune the number and/or volume of droplets deposited in the last iteration to match the total targeted volume. The notations used in this paragraph are summarized in the table 1 (Notation used to describe the iterative procedure which is the basis of the invention) below. For the first printing step, the procedure aims for depositing the maximum percentage of the total targeted volume M which insures that the total targeted volume cannot be exceeded. If the typical accuracy of the printer is X % deviation of volume, this leads to a percentage of 100-X % and to a volume equal to $M_1 = M(1-x)$ where $x=X/100$. After the first printing step, the volume which still needs to be deposited to reach M can be calculated based on the measurement of the deposited volume noted $M_1^*$ and is found to be $M-M_1^*$. The second step can thus be performed targeting a volume $M_2=(M-M_1^*)(1-x)$ insuring that M will not be exceeded. In order to generalize this approach, we note $M_i$ the volume targeted for the printing step i. The actual volume which has been printed is controlled by features (1) and (2) and is noted $M_i^*$ for the printing step i. After (n-1) successive printing steps, the total missing volume is thus

$$M - \sum_{i=1}^{n-1} M_i^{*}$$

and the targeted volume of the step n is found to be

$$M_n = \left(M - \sum_{i=1}^{n-1} M_i^{*}\right)(1 - x).$$

This procedure can be continued as long as required to reach the desired accuracy.

*Table 1:*

| Printing step | Targeted volume | Measured volume | Missing volume |
|---|---|---|---|
| 1 | $M_1=M(1-x)$ | $M_1^*$ | $M-M_1^*$ |
| 2 | $M_2=(M-M_1^*)(1-x)$ | $M_2^*$ | $M-M_1^*-M_2^*$ |
| n | $M_n = \left(M - \sum_{i=1}^{n-1} M_i^{*}\right)(1 - x)$ | $M_n^*$ | $M - \sum_{i=1}^{n} M_i^{*}$ |

By doing so, the overall uncertainty on the printed volume can be reduced to the cumulated uncertainties of

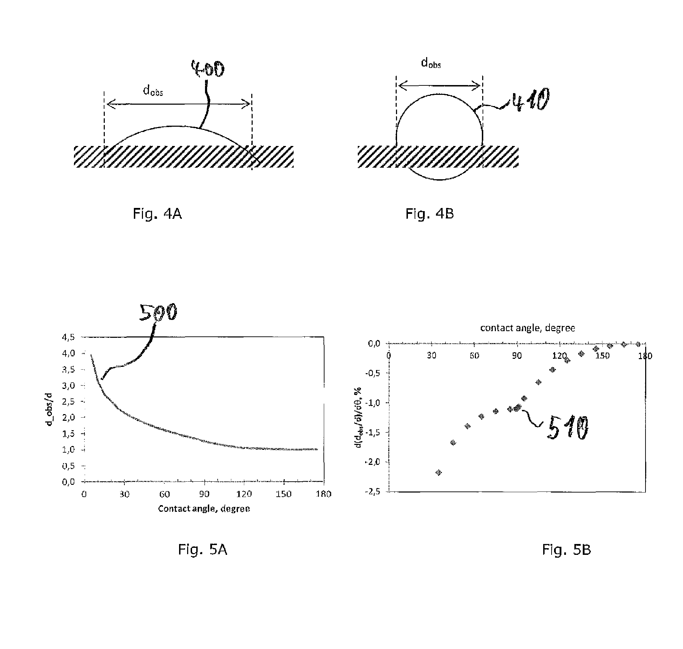

(i) the imaging quality of the in-line control system. For in-line imaging of type (a), with a typical magnification of $2\mu$m/pixel (micrometer per pixel) the overall uncertainty is in the range of $1\mu$m for the estimation of the deposited drop diameter. As a drop of 2nl (nano liter) with a contact angle of 90° with the substrate has a diameter of 200 $\mu$m, this represents 0.5% of uncertainty of the diameter measurement. This could be enhanced by using fluorescent markers diluted in the printed liquid. The accuracy of this measurement can also be enhanced by printing several drops per spots. Typically with 100 drops of 2 nl deposited at the same position and keeping a contact angle of 90° with the substrate, the diameter of the resulting sessile drop is 460 $\mu$m which is thus measured with an accuracy of 0.2%. For a high speed line camera (b) with a magnification of 2 $\mu$m/pixel, the uncertainty is in the range of 2 $\mu$m leading to an accuracy of 2.5% for a drop of 2 nl. For a system of type (c) the accuracy is function of the photodiode responsivity in the spectral region of the illumination, of its dark current and of its size; the response time is not a limitation since it is usually in the range of 1 ns or less.
(ii)the contact angle variation for a given couple of {substrate, liquid}, in case of an in-line imaging system of type (a). For contact angles in the order of 30°, 90° or 120° respectively, a variation of 1° of the contact angle leads to a variation of 2%, 1% and 0.3% respectively of the diameter of the deposited drop independently from its volume (which is illustrated in Fig. 4 and 5 and will be described later). Working with high contact angles appear to be positive. Special coating or surface treatment could be applied to the substrate to increase contact angle and reduce its variability. For in-line imaging of types (b) and (c), the accuracy of measurement is independent of the contact angle of the ink with the substrate.
(iii) the actual volume variability of the last iteration step. This actual volume variability can be reduced to a fraction of a percentage of the targeted volume independently from the printer accuracy. Indeed, if the typical printer accuracy is 10% and the last printing step corresponds to 2% of the total targeted volume, the resulting accuracy reached by following the disclosed invention is as high as 10% of 2% i.e 0.2%.

In particular, Fig. 4A on the left shows a printed drop 400 with a contact angle theta smaller than 90°, while Fig. 4B on the right shows a printed drop 410 with a contact angle theta larger than 90°. If we noted the drop diameter when spherical, prior to its deposition, we can write:

$$\theta < 90° \qquad \frac{d_{obs}}{d} = 2^{2/3}\sin\theta\,(\cos^3\theta - 3\cos\theta + 2)^{-1/3}\;;$$

and

$$\theta > 90° \qquad \frac{d_{obs}}{d} = 2^{1/3}\left(1 - \cos\theta\left(1 + \frac{\sin^2\theta}{2}\right)\right)^{-1/3}$$

Furthermore, Fig.5A on the left shows a graph 500 illustrating variation of $d_{obs}/d$ as a function of $\theta$, the contact angle. This relation can be used to deduce the actual printed volume from the top view images provided by in-line camera. Fig. 5B on the right shows a graph 510 illustrating the first derivative of $d_{obs}/d$ with $\theta$ showing the moderate dependence of $d_{obs}/d$ on $\theta$ for large contact angles.

Summarizing a method or process of iteratively printing a printing material like a liquid (e.g. an active pharmaceutical agent or liquid) may be provided. Preferably the already or actual printed amount of the printing material is determined or calculated on the fly, e.g. by using an imaging system, like a camera, the measurement of which is used to calculate the actual printed amount by a computing or processing unit, like a computer. Based on the calculated actual amount the printing amount of a subsequent printing step is determined, e.g. by controlling a print head of a printer accordingly. Thus, a kind a feedback loop may be provided, possibly leading to the fact that the actual printing amount can be controlled rather accurately. In principle, every desired accuracy level may be achievable by just increasing the number of iteration steps or printing steps, even for the case that the intrinsic accuracy of the print head is limited.

It should also be noted that the term "comprising" does not exclude other elements or features and the "a" or "an" does not exclude a plurality. Also elements described in association with different embodiments may be combined. It should also be noted that reference signs shall not be construed as limiting the scope of the claims. While the invention has been particularly shown and described with reference to specific embodiments, it should be understood by those skilled in the art that various changes in form and detail may be made therein without departing from the spirit and scope of the invention as defined by the appended claims. The scope of the invention is thus indicated by the appended claims and all changes which come within the meaning and range of equivalency of the claims are therefore intended to be embraced.

**Claims**

1.  Method of printing a predetermined amount of material, in particular liquid material, onto a substrate, the method comprising:

    printing a first amount of material onto a substrate, wherein the first amount of material is smaller than the predetermined amount of material;
    determining the actual printed first amount of material;
    determining a difference amount between the actual printed first amount of material and the predetermined amount of material;
    printing a second amount of material onto the substrate, in particular onto a same position on the substrate as the first amount, wherein the second amount of material is less or equal to the difference amount.

2.  In-line method for controlling and finely adjusting the amount of printed material independently from the printing system accuracy and stability; printing strategy combining (i) in-line imaging system, (ii) in-line volume calculation capabilities and (iii) feedback loop to the printer to progressively and finely approach the targeted volume.

3.  The method according to claim 1 or 2, wherein the determining of the actual printed first amount is performed based on a measurement of an imaging system, in particular an in-line imaging system.

4.  The method according to any one of the claims 1 to 3, wherein an image of the substrate is taken substantially from above the substrate.

5.  The method according to any one of the claims 1 to 4, wherein the determining is performed in-line or on the fly.

6. The method according to any one of the claims 1 to 5, wherein the printing and calculating steps are performed iteratively.

7. The method according to claim 6, wherein the printing and calculation steps are performed till the determined difference amount is below a predetermined threshold.

8. The method according to any one of the claims 1 to 7, wherein the material comprises a pharmaceutical active ingredient.

9. A device for printing predetermined amount of material onto a substrate, wherein the device is adapted to perform a method according to any one of the claims 1 to 7.

10. The device according to claim 9, comprising at least one element out of the group consisting of:

   a printer;
   an imaging system;
   an illumination system;
   a processing system; and
   a feedback loop.

11. A computer-readable medium, in which a computer program is stored, which, when being executed by a processor, is adapted to control or carry out a method according to any one of the claims 1 to 8.

12. A program element, which, when being executed by a processor, is adapted to control or carry out a method according to any one of the claims 1 to 8.

Fig. 1A

Fig. 1B

Fig. 2

Fig. 3A

Field n-1          Field n

Fig. 3B

Fig. 4A

Fig. 4B

Fig. 5A

Fig. 5B